Europäisches Patentamt

European Patent Office

Office européen des brevets

(11) Publication number: **0 325 778**
**A2**

# (12) EUROPEAN PATENT APPLICATION

(21) Application number: **88121492.8**

(22) Date of filing: **22.12.88**

(51) Int. Cl.⁴: **C08J 3/00 , C08L 101/00 , C08J 3/14**

(30) Priority: **19.01.88 US 145029**

(43) Date of publication of application:
**02.08.89 Bulletin 89/31**

(84) Designated Contracting States:
**DE FR GB IT NL**

(71) Applicant: **GENERAL ELECTRIC COMPANY**
**1 River Road**
**Schenectady New York 12305(US)**

(72) Inventor: **Mendiratta, Ashok Kumar**
**1317 Viewmont Drive**
**Schenectady New York 12309(US)**

(74) Representative: **Catherine, Alain**
**General Electric France Service de Propriété**
**Industrielle 18 Rue Horace Vernet B.P. 76**
**F-92134 Issy-les-Moulineaux Cédex(FR)**

(54) **Method for obtaining a uniform blend of polymers.**

(57) A method for obtaining a uniform blend of polymers is described, which involves mixing a solution of the polymers with an aqueous medium under high shear mixing conditions and at elevated temperatures while evaporating solvents for the solution at a rate which permits agglomeration of the devolatilizing polymers onto polymer particles to form polymer granules. Each granule contains an amount of polymer substantially proportional to the concentration of that polymer in the initial feed.

EP 0 325 778 A2

# METHOD FOR OBTAINING A UNIFORM BLEND OF POLYMERS

This invention relates generally to polymer processing, and more particularly, to methods for obtaining uniform blends of polymers.

## Background of the Invention

Plastics are extremely important materials of use in today's environment because of the wide variety of desirable properties they offer. For example, polycarbonates are in general characterized by high strength, good thermal stability, and excellent transparency, while various polyamides are characterized by toughness, chemical resistance, and abrasion resistance.

The ever-changing marketplace is more frequently requiring plastic products to have a much greater range of physical and chemical characteristics. For example, the use of polycarbonates in the automobile industry often requires an improvement in certain other properties, such as surface hardness, solvent resistance, and flexibility. One method of improving the performance of polycarbonates in these other areas involves blending with other polymers possessing the desired characteristics. For example, polycarbonates may be blended with thermoplastic elastomers in order to enhance elongation and flexibility characteristics. In the same manner, many other polymers may be blended with each other and thereby tailored to provide a desired combination of mechanical, thermal, and chemical properties for a particular end use.

The characteristics of polymers formed from a combination of polymers often depends on the manner in which the polymers have been blended. Blending techniques are especially critical when the polymers themselves tend to be chemically or physically incompatible with each other. An exemplary prior art process for achieving a desired blend involves the mixing of various solid polymers for extended periods of time at room temperature. Such a process exhibits notable disadvantages. For example, if the fragments of each polymer (e.g., pellets, powder, or strands) are different in shape and density from those of the other polymers, uniformity of the final product in terms of appearance and properties often suffers. Physical properties which are adversely affected by a nonuniform blend include impact strength, elongation, and tensile strength. Nonuniformity also often results in a laminated product which may have an undesirably rough texture. Such nonuniformity is in part due to the fact that each product particle does not contain proportionate amounts of each polymer used to form the product, thereby leading to an uneven distribution of individual polymer characteristics throughout the product.

Polymer blends are sometimes extruded at elevated temperatures (after being mixed) in an attempt to enhance compatibility. However, nonuniform characteristics can sometimes remain.

It is therefore an object of the present invention to obtain a uniform blend of polymers, even in the absence of an extrusion processing step.

It is a further object of the present invention to obtain a uniform polymer blend from solution, in which each solid product granule contains proportionate amounts of each polymer of the initial feed.

Another object of the present invention is to obtain blends of solid polymers in which each product granule has an optimum size and morphology for drying and subsequent downstream processing.

Yet another object of the present invention is to provide a means for obtaining a uniform blend of polymer granules of a desired composition, and for then isolating such a blend.

## Summary of the Invention

These and other objects are accomplished by a method which comprises admixing at least one organic solvent solution of the polymers with an aqueous medium under high shear mixing conditions and at an elevated temperature while evaporating solvent from the admixture at a rate which permits agglomeration of the polymers onto the polymer particles present in the admixture, so as to form polymer granules which contain an amount of each polymer substantially proportional to the concentration of that polymer in the organic solvent solution.

The process may be continuous, in which the organic solvent solution of the polymers (hereinafter alternatively referred to as the "polymer solution" or the "polymer feed") and a slurry of polymer particles are each continuously fed into a vessel from which volatilization is controlled as described below. In another embodiment, the process is carried out as a semi-continuous operation. In yet another embodiment, the organic solvent solution and an aqueous slurry of polymer particles are both continuously fed into the volatilization vessel while solid polymer product granules which form are continuously removed. In this embodiment, the polymer feed is interrupted upon formation of polymer granules of a desired size to dry the granule surfaces, followed by resumption of the feed.

Detailed Description of the Invention

A wide variety of polymers may be isolated from organic solutions and then blended according to the method of the present invention. They generally have a molecular weight average above about 200, usually in the range of about 10,000 to about 50,000. The term "polymer" as used herein is meant to include thermoplastics and elastomers. These polymers may be prepared by various techniques, such as condensation or addition reactions. Examples of suitable thermoplastics are polycarbonates, including cyclic polycarbonates; polystyrene, including high impact polystyrene and brominated derivatives of polystyrene; polyphenylene ethers, polyetherimides; and polyesters, including polyethylene terephthalates and polybutylene terephthalates.

Examples of suitable elastomers are ethylene propylene rubbers, butadiene rubbers, diene-modified ethylene propylene rubbers, and Kraton® rubbers (such as those described in U.S. Patents 4,270,778, 4,239,575, 4,074,715, and 4,032,491, each incorporated herein by reference). A specific example of a Kraton® resin is Kraton-G®, a copolymer of polystyrene and polyethylenebutylene. U.S. Patent 4,090,996, issued to Gergen et al., also provides a detailed description of suitable elastomers, and is incorporated herein by reference. All of the above-mentioned polymers possess the common property of being soluble in at least one organic solvent solution from which they may be isolated.

Illustrative blends of polymers formed by the presently-disclosed process are those of polycarbonate and polyphenylene oxide; polyphenylene oxide and high impact polystyrene (e.g., the type of polystyrene described in U.S. Patents 4,167,507 and 4,073,765, incorporated by reference herein); polycarbonate and an elastomer such as one of the Kraton® materials; and polyphenylene oxide and one of the Kratons®.

The various embodiments of this invention are capable of forming uniform blends of polymers in any desired ratio, e.g., a blend of polyphenylene oxide and high impact polystyrene in a weight ratio ranging from about 40:60 to about 60:40, respectively.

These blends may also contain azide compounds, which are thought to provide functional sites for cross-linking between two or more of the other components. Exemplary azides are diphenylphosphinyl azide; diethylphosphoric azide; diphenylphosphinic azide; and 4,4'-biphenyldisulfonyl azide. Azides are discussed in U.S. Patent 4,579,905, incorporated herein by reference. An exemplary blend of this type contains polycarbonate, Kraton-G®, and an azide.

As mentioned above, the polymers are dissolved in organic solvent prior to treatment by the present invention. In most instances, the solvent is one which was employed during the preparation of the polymer from its monomeric precursors. Organic polymer solutions having concentrations of polymer resin (total polymer) up to above 50% by weight may be conveniently used. Usually, the polymers are dissolved at about 1% to about 30% total weight in one or more of the solvents listed below. Preferably, the polymers are dissolved at about 10% to about 20% total weight in the solvent.

The polymer solutions may be mixed with one another prior to admixture with the aqueous medium. Alternatively, individual solutions of each polymer (i.e., separate feedstreams), may be simultaneously admixed with the aqueous medium, with each stream controlled as to flow rate and solids content so that the desired ratio of components forming the product may be obtained. For ease and clarity of description, "polymer solution" as used herein is meant to embrace the use of combined or separate feedstreams.

The organic solvent which contains the polymer resin preferably has a boiling point below 100°C at 1 atmosphere pressure. The solvent should also be immiscible with water. Examples of solvents which may be used herein are halogenated hydrocarbons having from 1 to 20 carbon atoms, e.g., methylene chloride, 1,1,2,2-tetrachloroethane, 1,2-dichloroethylene, chlorobenzene, chloroform, dichlorobenzene, 1,1,2-trichloroethane; and aromatic and aliphatic hydrocarbon solvents such as benzene, xylene, toluene, pyridine, mesitylene, hexane, pentane, heptane, and the like. Different solvents may be used for each polymer, with the proviso that the solvents have somewhat similar boiling points, e.g., within about 10°C of each other, and more preferably, within about 5°C of each other. In preferred embodiments, the same solvent is used for all of the polymers and other compounds being blended, thereby avoiding premature precipitation of any polymer during processing.

Methylene chloride is the preferred solvent for use with polycarbonate, although some of the other solvents mentioned above would also be suitable. Toluene is the preferred solvent for both polystyrene (including high impact versions thereof) and polyphenylene ethers, while methylene chloride or toluene are the preferred solvents for Kraton® elastomers.

A key feature of this invention is the presence of solid polymer particles during devolatilization of the organic solvents containing the polymer resin. These particles, preferably containing proportional amounts of each polymer used to form the blend, provide sites for the agglomeration of the resin material in solution. The agglomeration sites permit the formation of high bulk density material while helping to prevent the formation of new, finely divided, flaky particulates of low bulk density. The origin of these particles will be discussed below.

The solid polymer particles can be of any size since their function is only to provide solid surfaces on which the polymer resins in solution can agglomerate. However, solid polymer particles having a diameter within the range of about 1 to 500 microns are preferred because of the ease in handling slurries of such particles in some embodiments of this invention. Furthermore, particles within this size range can accept a degree of agglomeration sufficient to provide a solid granular product of a useful average size, preferably within the range of about 500 to 5000 microns.

In most embodiments of this invention, the aqueous medium can generally accommodate up to about 50% by weight solid polymer particles suspended therein and still be effective for use in this process. However, concentrations of less than 20% by weight are preferred, with a minimum concentration being about 0.1% by weight particles. Concentrations lower than the minimum do not provide a sufficient number of agglomeration sites. The most preferred concentration of solid polymer particles falls within the range of about 0.5% to 5% by weight total polymer.

In one embodiment of the present invention, the process is continuous, in that the polymer feed is continuously admixed with an aqueous slurry containing water and the solid polymer particles. As further described below, this embodiment calls for the continuous evaporation of solvent from the admixture, thereby resulting in agglomeration of the polymer resin onto the polymer particles to form solid polymer granules. The polymer and aqueous slurry feed rates may be controlled by methods well-known in the art, such as by the use of a metering pump. The continuous embodiment is similar to a continuous process for isolating individual polymer resins from organic solvents, described in U.S. Patent 4,603,194, and incorporated herein by reference.

The aqueous slurry of solid polymer particles utilized in embodiments of this invention may be formed by admixing organic solvent solutions of various polymers with water while simultaneously volatilizing the organic solvents to permit solidification of the polymer. The polymers suitable for generating the aqueous slurries are usually the same as the polymers which are to be later blended, i.e., those described previously. Thus, the organic solvents may contain substantially the same concentrations of polymers utilized in the main blending process.

This invention also includes within its scope the use of only one type of polymer to form the aqueous slurry. This polymer is preferably one of the feed polymers forming the blend. However, in order to achieve the highest uniformity of product composition, the polymer particles contain the same composition as that of the polymer feed which is to be mixed with the aqueous medium.

Volatilization to form the polymer particles is preferably achieved at a rate high enough to eliminate the growth of these particles, permitting only their solidification. The weight ratio of water to total polymer resin is preferably maintained above a value of about 4 during the formation of the aqueous slurry. As mentioned earlier, a particle size within the range of about 1 to 500 microns for the aqueous slurry is preferred.

As further described in U.S. Patent 4,603,194, the production of an aqueous slurry of polymer particles is preferably carried out at temperatures within the range of about 5°C to 35°C above the boiling point of the organic solvent. Furthermore, the desired weight ratios of water to total polymer are from about 1:1 to about 50:1, and more preferably, from about 2.5:1 to about 20:1. After the aqueous slurry has been formed, it may be used immediately in the other process steps of this invention, or may be stored for later use.

In the continuous embodiment, the organic solvent solution of polymers is admixed with the aqueous slurry by any convenient means, e.g., the use of an impeller. It is preferable (though not always essential) that the vessel in which these components are mixed not contain baffles, since they sometimes interfere with the agglomeration process. High shear mixing is required for the present invention. The concept of high shear is known in the art and described, for example, in U.S. Patent 3,267,074, issued to N.V. Wood and incorporated by reference herein. This type of agitation provides a "cutting" action within the admixture, thereby uniformly distributing the particles and polymer feed material prior to and during agglomeration. High shear can be achieved by the use of various devices, such as those described in the Wood patent. In the present invention, high shear can usually be obtained within an unbaffled vessel by rotating an impeller at a tip speed of at least about 5 ft./sec., with preferred tip speeds falling within the range of about 10 to 70 ft./sec. Various factors which promote and affect high shear are also discussed in detail in various articles, the following two being exemplary: CE Refresher: Liquid Agitation/2, Dimensional

4

Analysis for Fluid Agitation Systems and CE Refresher: Liquid Agitation/4, How to Design Agitators for Desired Process Response; Chemical Engineering, January 5, 1976 (pp. 139-145) and April 26, 1976 (pp. 102-110), respectively. The teachings of each of these articles are incorporated herein by reference. Thus, one of ordinary skill can examine factors like admixture viscosity, impeller shape, impeller speed, and vessel volume to obtain high shear for a given polymer system.

Volatilization of the organic solvents is achieved by admixing at elevated temperatures "Elevated temperatures" as used herein describes temperatures that are high enough to volatilize the solvents while avoiding the occurrence of large sticky globs of polymer, but low enough to allow agglomeration to take place to form granules of a desired size without simply forming new polymer particles. Usually, such temperatures are within the range of from about 20°C below to about 30°C above the boiling point of the organic solvent used in the polymer feed. The temperature employed should not exceed the glass transition temperature of the polymer to be isolated. Volatilization of the organic solvents usually commences immediately upon mixing of the components.

For a methylene chloride-based solution, the most preferred temperature range is about 35°C to 55°C at about 1 atmosphere pressure. For toluene, an azeotrope forms with water, and the most preferred temperature range is about 80°C to 100°C at about 1 atmosphere pressure. For chloroform, the most preferred temperature range is about 55°C to about 70°C at about 1 atmosphere pressure. Adjustments and variations within these ranges can be made by those of ordinary skill without undue experimentation. Furthermore, temperature ranges for the other solvents disclosed herein can also be determined by simple experimentation, based on the guidelines outlined here.

The admixture may be maintained under vacuum or under a pressure . Pressures of about 0.1 to about 2 atmospheres are preferred; however, pressures outside this range can be utilized if desired.

The volatilization rate determines whether the polymer resins within the organic solution agglomerate onto the solid polymer particles of the slurry, whether they solidify to form new solid thermoplastic particles, or whether they form a sticky mass. Slow volatilization rates permit agglomeration onto the solid polymer particles. However, where the rate of volatilization is too slow, the polymer resin will form a sticky glob within the admixture. The volatilization rate is affected by many variables, including the ratio of water to organic solvent, the heat input (temperature) into the admixture, and the extent of agitation provided within the admixture. Adjustment of these parameters according to the guidelines described herein will result in polymer granules having the proper attributes described above.

Heat input into the admixture is the predominant factor affecting volatilization rate. As the heat input per unit of total polymer resin increases, volatilization rate also increases. Heat input is determined by the temperature and the volume of the admixture. Larger volumes of water per unit of polymer resin provide higher rates of volatilization at a given temperature. Temperatures at or above about 40°C above the boiling point of the organic solvent within the admixture can accelerate the volatilization rate to the extent where the polymer resins will not agglomerate, instead forming new particles, which is an undesirable result. Temperatures at or lower than about 10°C below the boiling point of the organic solvent within the admixture decrease the volatilization rate to such an extent that the resins form a large sticky glob, which is also an undesirable result. Furthermore, utilizing quantities of water and organic solvent beyond the ranges specified herein will sometimes provide undesirable volatilization rates. In addition, operating outside of the temperature and polymer concentration ranges described herein may result in agglomeration of only a portion of the polymer resin.

The ratio of water to organic solvent is a contributing factor in determining the volatilization rate. The volatilization rate increases as the ratio of water to organic solvent increases at a given temperature. It is preferable to maintain this ratio as low as possible in order to enhance the efficiency of the process. A weight ratio having a value within the range of 10 to about 0.15 is preferred.

The degree of agitation is also a factor to be considered here. The volatilization rate is increased as agitation increases because of improved dispersion and heat transfer. In addition, increased agitation contributes to the heat input into the system, due to friction.

The weight ratio of water to total polymer, including solids within solution, is maintained at a value within the range of about 1:1 to about 50:1, and preferably, about 2.5:1 to about 20:1. Weight ratios below a value of 1.0 may cause the admixture to be highly viscous, thereby making the solids content of the product slurry difficult to handle. Weight ratios above 50 encourage high volatilization rates for the organic solvent, thereby hindering the agglomeration of the polymer resin.

The polymer granules produced in the continuous embodiment are recovered continuously from the admixture. An outlet positioned near the top surface of the admixture is usually suitable for recovering the product. The granules are then separated by conventional liquid-solid separation techniques, such as centrifugation, filtration, screening, and the like. If desired, these granules may be dried prior to use within subsequent processing equipment. The solid polymer granules usually exhibit a low residual solvent and water content upon removal from the aqueous slurry. For example, granules containing polycarbonate and Kraton® components will usually contain less than about 20% by weight water and less than about 7% by weight methylene chloride. Furthermore, the granules are usually of a high bulk density.

The granule sizes often vary over a range of about 50 to 10,000 microns in size when the process is operated continuously. The average size typically ranges from about 500 to 5000 microns. The average size is dependent on at least several factors: the degree of agitation (as described above); the solvent vaporization rate; and the ratio of total polymer resin within the feed of organic solution to the number of polymer particles in the aqueous slurry feed. The granules are porous and amenable to removal of residual water and solvent by conventional drying techniques.

The scope of this continuous process is meant to include the use of an aqueous slurry prepared separately, i.e., apart from the main process line, and then fed into the volatilization vessel. However, this embodiment also may include the use of an on-line preliminary volatilization vessel supplied by both a water line and an additional organic polymer feed line, the feed for the latter being from the same source as that which feeds the main volatilization vessel. The amount and rate of organic polymer feed into the preliminary volatilization vessel may be controlled as described above. The aqueous slurry formed in the preliminary volatilization vessel is then fed into the main volatilization vessel under the conditions described above, the rest of the process being generally the same.

In an alternative embodiment of this invention, hereinafter also referred to as a "semicontinuous" embodiment, agglomeration sites can be formed without a separate source of the aqueous polymer particle slurry. The polymer particles form within the same vessel utilized for agglomeration by feeding the organic solvent solution of the polymers into a fixed volume of water. Upon formation of the polymer particles, subsequently fed polymer resin is fed into the vessel and admixed with the polymer particles under high shear conditions. The polymer resin agglomerates onto these particles while volatilization continues. Feeding of the polymer solution and agglomeration are allowed to continue until polymer granules of a desired size are obtained. The size of the granules obtained for a given volume of polymer feed is controlled via the volatilization rate, i.e., by manipulation of the feed rate and/or the rate of heat input into the system.

In the semicontinuous embodiment, organic solutions having concentrations of polymer resin up to about 50% by weight are suitable, with the most preferred concentrations of polymer resin falling within the range of about 10 to 30% by weight. All other parameters are generally the same as in the continuous embodiment.

After polymer granules of a desired size are obtained in the semicontinuous operation, the entire slurry is drained and filtered. The polymer granules may be dried, if desired. The process is then repeated with another batch of material. Other details and considerations for this embodiment may be found in the description of the "semicontinuous operation" in U.S. Patent 4,603,194, it being understood that the present invention contemplates the use of at least two polymers.

In either the continuous or semicontinuous embodiments, it is possible to control the size of the polymer granules obtained from a given total volume of organic solvent. This may be accomplished by controlling the number of particles that are present prior to agglomeration of polymer resin onto these particles. The number of particles is controlled by the selection of values for polymer solution flow rate, heat input rate, and the degree of agitation during formation of the particles, as described above. These values may be altered once the desired number of particles are obtained to provide more efficient agglomeration. For example, lower values for the feed rate and higher values for agitation and temperature provide more polymer particles. More polymer particles in turn provide smaller polymer granules for a given feed of polymer solution. The number of particles formed may also be controlled by varying the feed rate, although this method of control will result in varying productivity for the entire process.

In still another embodiment, which can be referred to as the "organic feed interruption" embodiment, the polymer solution and the aqueous medium are both fed into a volatilization vessel under high shear admixing conditions while solid polymer product granules are removed. In preferred embodiments, the product is removed on a continuous basis, often after a short time has elapsed to allow the process to reach a steady state. Upon formation of polymer granules of a desired size, the polymer feed is interrupted and the remaining organic solvent within the admixture is volatilized so that the granule surfaces may dry. An average size within the range of about 1000-5000 microns is usually desirable before interruption of the feed. The polymer feed is then resumed. A key attribute of this particular embodiment is that an aqueous slurry of polymer particles is unnecessary. The aqueous medium need only contain water, although it may contain polymer solids and still be effective. U.S. Patent 4,634,761, incorporated herein by reference, describes an organic feed interruption process for isolating a polymer resin from solution. The process parameters described therein and in the foregoing description of the continuous embodiment also serve as a guideline here, except where otherwise indicated.

Once the surfaces are substantially dry, agglomeration will not take place thereon. New agglomeration sites will then form in the presence of the unrecovered polymer granules upon resumption of the polymer feed and further volatilization of the organic solvents.

This embodiment may utilize any of the polymers or combinations of polymers described previously. The desired solids content of those polymers in the particular solvents described above is also generally the same. The organic solvent solution feed containing the polymer resins is preferably comprised of an organic solvent having a boiling point below about 100°C at 1 atmosphere in order to achieve maximum efficiency.

As in the previously disclosed embodiments, a polymer concentration of up to about 50% by weight total polymer (based on total solvent) is desirable. For polymers such as polycarbonate, polystyrene, polyphenylene ethers, polyesters, and polyetherimides, preferred polymer concentrations fall within the range of about 10 to 30 weight percent, while preferred polymer concentrations for elastomeric polymers such as ethylene propylene rubbers fall within the range of about 1 to 20 weight percent.

Furthermore, parameters such as the ratio of water to total polymer are the same as those described for the continuous embodiment, unless otherwise indicated here.

The aqueous medium in the organic feed interruption embodiment preferably contains only water, and is usually a continuous feed. Admixing of the water and the polymer feed may be conveniently achieved within any unbaffled vessel by means of an impeller producing the high shear conditions described above. As in the previously discussed embodiments, it is to be understood that the polymer feed may, at the point of contact with the water, be composed of one feed stream or multiple feed streams.

Feed rates for the water and the polymer solution are matched as in the other embodiments. Volatilization of the organic solvents at the proper rate is achieved by heating the admixture to a temperature within the ranges described previously. Factors affecting volatilization rate are discussed in U.S. Patents 4,634,761 and in 4,603,194.

The granules withdrawn as the product preferably have a size greater than about 500 microns when dry. Granules smaller than this may become wet very quickly upon introduction of more organic solvent solution. Furthermore, the smaller granules tend to congregate near the impeller and are more susceptible to further agglomeration.

To ensure that the unrecovered granule surfaces are dry, volatilization of the organic solvents from the admixture is preferably continued for about 1 to 10 minutes after the polymer feed is interrupted. If evaporation temperatures higher than those described above are employed, the period of time necessary to dry the unrecovered granules may be reduced.

Once the granule surfaces are dry, the polymer feed is resumed. In the absence of agglomeration sites, the polymer resin in the feed will solidify immediately after resumption to form fine particles. Polymer resins subsequently fed into the admixture will agglomerate onto these fine particles because they are wet. The dried granules will eventually exit and admixture without much further growth.

The polymer granules produced may be recovered from the admixture with water, and then separated by conventional liquid/solids separation techniques such as those discussed above.

The granules formed by the various embodiments of the present invention each contain every polymer present in the initial polymer feed, in an amount proportional to the percentage of that polymer in the feed. The particular structure of each granule in terms of polymer arrangement is not critical to the present invention, and depends in part on the relative amounts of each polymer in the initial feed, and upon the type of polymer itself. If equal amounts of two polymers are used, the granules which are produced each have a very uniform distribution of each polymer. Furthermore, the granules exhibit a narrow size distribution, even when the processes are operated continuously.

The following examples illustrate the present invention. They are not intended to limit the scope thereof. All values and percentages refer to weight, unless otherwise indicated.

Example 1 -

In this example, a uniform blend of polyphenylene oxide (PPO) and high impact polystyrene was obtained by use of the semi-continuous embodiment discussed above. The polyphenylene oxide was poly-(2,6-dimethyl-1,4-phenylene oxide), also commonly referred to as polyphenylene ether. The high impact polystyrene (HIPS) contained about 5% by weight polybutadiene rubber, and was obtained from Foster Grant. The volatilization/agglomeration vessel was an unbaffled glass vessel (4 5/8" x 10" high) with an inlet port near the bottom for the polymer feed. The vessel was kept open to the atmosphere within a constant temperature bath to maintain desired temperatures in the system. The aqueous solution feed (water) required for the operation was fed through the top of the vessel at a continuous rate. A premixed 15% by weight solution of total polymer (50% PPO/50% HIPS) in toluene was used as the organic solvent solution feed. The devolatilization vessel was charged with 700 ml water. The impeller used to provide agitation was a single strip impeller (3 3/8" diameter x 1/2" wide x 1/16" thick), and tip speed was maintained at 30 ft./sec. during the polymer feed and ongoing devolatilization. The vessel contents were maintained at a temperature of 98°C throughout the run. The polymer feed, which was continually cooled to avoid feed line plugging, was fed into the vessel at a rate of about 23 ml per minute for about 30 minutes. The feed was then stopped, and the system was permitted to run for another 5 minutes to further devolatilize the polymer granules.

The vessel contents were then drained, centrifuged, and dried. The granular product had an average bulk density of about 0.35 gm/cc. Gel permeation chromatography (GPC) analysis on several of the individual granules indicated that each solid granule contained about 50% by weight PPO and about 50% by weight HIPS.

Samples 1-3 (Table 1 below) were test pieces molded from the granular product obtained by the process of Example 1. Samples 1 and 2 were first extruded on a Welding Engineers twin screw extruder at the extruder flow rates indicated below, and then injection molded. Sample 3 was formed by injection molding without the extrusion step.

Samples 4-6 were controls outside the scope of the present invention. Each of these samples was formed by feeding PPO pellets and HIPS pellets (of the type described above) into the extruder, followed by molding as in Examples 1-3. Extrusion and molding conditions were as follows:

| Extrusion Conditions | |
|---|---|
| Zone 1 | 100°C |
| Zone 2 | 240°C |
| Zone 3 | 260°C |
| Zone 4 | 260°C |
| Zone 5 | 260°C |
| Zone 6 | 260°C |
| Screw Speed - 300 RPM | |

| Molding Conditions | |
|---|---|
| Nozzle 250°C | Cooling time - 18 sec. |
| Middle 250°C | Injection time - 10 sec. |
| Back 240°C | Mold open time - 2 sec. |
| Mold 60°C | Total cycle time - 30 sec. |

Each of Samples 1-6 was subjected to the tests described in Table 1:

8

TABLE I

| Properties of Polyphenylene Oxide/High Impact Polystyrene Blends | | | | | | | |
|---|---|---|---|---|---|---|---|
| Sample No. | Description | Extruder Flow Rate[a] | Izod Impact (ft./lbs.) | Gardner Impact (ft./lbs.) | Stress at Yield (psi) | Elongation Break (%) | Tensile Modulus (psi) |
| 1 | PPO/HIPS | 10 | 3.1 | 293 | 9100 | 93 | 331,000 |
| 2 | PPO/HIPS | 16 | 3.5 | 238 | 9100 | 108 | 363,000 |
| 3 | PPO/HIPS (Not Extruded) | -- | 3.9 | 274 | 8400 | 107 | 331,000 |
| 4 | PPO/HIPS CONTROL | 16 | 3.6 | 385 | 8700 | 111 | 329,000 |
| 5 | PPO/HIPS CONTROL | 16 | 3.4 | 408 | 8800 | 131 | 320,000 |
| 6 | PPO/HIPS CONTROL | 10 | 3.7 | 445 | 8800 | 108 | 354,000 |

(a) lbs/hour

The above results indicate that in general, a uniformly blended product according to the present invention exhibits physical properties equal to those of products blended by prior art methods. It should be noted that sample 3 exhibited excellent properties, even in the absence of extrusion of the granular product.

Example 2

The technique described in Example 1 was also used here to form a uniform blend of polycarbonate resin and an elastomer. A 15% by weight solution of bisphenol A-based polycarbonate and Kraton-G® rubber (at 90/10 by weight polycarbonate/Kraton-G®) in methylene chloride was used as the polymer feed. After the run, the vessel contents were drained, centrifuged and dried. The product had a bulk density of 0.4 gm/cc. GPC analysis of several of the individual granules showed that each granule contained about 90% by weight polycarbonate and about 10% by weight Kraton-G®.

Example 3

The procedure of Examples 1 and 2 was used to obtain a uniform blend of bisphenol A-based polycarbonate and an elastomer. In this example, a 15% by weight solution of polycarbonate (87%), Kraton-G® (10%) and diphenylphosphinyl azide (3%) in methylene chloride was used as the material feed. The granular product obtained had a bulk density of about 0.42 gm/cc. Several of the granules were analyzed by GPC and were shown to contain a proportion of each component corresponding to the proportion of that component in the feed solution.

Example 4

The procedure used in the previous examples was also employed here. In this example, a 15% by weight solution of PPO and Kraton-G® (90/10 by weight) in toluene was used as the polymer feed. The granular product obtained by this method had a bulk density of about 0.35 gm/cc. The granules which were analyzed by GPC contained approximately 90% by weight polyphenylene oxide and 10% by weight Kraton-G®.

Example 5

The same procedure was again used for this example, with the organic feed solution containing a 50/50 blend of polyphenylene oxide and bisphenol A polycarbonate at 15% by weight in chloroform. After the process was complete, analysis of the granular product showed a bulk density of about 0.38 gm/cc. Furthermore, each granule which was analyzed contained approximately equal amounts of polyphenylene oxide and polycarbonate.

Other modifications and variations of the present invention are possible in light of the above teachings.

It is therefore to be understood that changes may be made in particular embodiments described which are within the full intended scope of the invention as defined in the appended claims.

**Claims**

1. A method of obtaining a uniform blend of at least two polymers, comprising the admixing of at least one organic solvent solution of the polymers with an aqueous medium under high shear mixing conditions and at an elevated temperature while evaporating solvent from the admixture at a rate which permits agglomeration of the polymers onto polymer particles present in the admixture, so as to form polymer granules which contain an amount of each polymer substantially proportional to the concentration of that polymer in the organic solvent solution.

2. The method of claim 1 wherein the aqueous medium is a slurry of polymer particles having substantially the same polymer composition as in the organic solvent solution, said particles ranging from about 1 micron to about 500 microns in size.

3. The method of claim 1 wherein the admixture is maintained at a temperature above about 20°C below the boiling point of the organic solvent.

4. The method of claim 3 wherein the admixture is maintained at a temperature below about 30°C above the boiling point of the organic solvent.

5. The method of claim 2 wherein the polymers are dissolved at about 10% to about 20% total weight in an organic solvent selected from the group consisting of methylene chloride, 1,1,2,2-tetrachloroethane, 1,2-dichloroethylene, chloroform, 1,1,2-trichloroethane, pyridine, chlorobenzene, dichlorobenzene, benzene, xylene, toluene, mesitylene, hexane, heptane, pentane, and mixtures thereof.

6. The method of claim 2 wherein the weight ratio of water to total polymer during the evaporation of solvent is maintained at a value in the range of about 1:1 to about 50:1.

7. The method of claim 6 wherein the weight ratio of water to total polymer is about 2.5:1 to about 20:1.

8. The method of claim 6 wherein the admixture is achieved by a rotating impeller within an unbaffled vessel having a tip speed of at least about 5 ft/sec.

9. The method of claim 8 wherein the tip speed is about 10 to 70 ft/sec, and the organic solution containing the polymers is fed into the bottom of the vessel.

10. The method of claim 1 wherein the polymers are polycarbonate and an elastomeric block polymer dissolved in methylene chloride.

11. The method of claim 10 wherein the solution of polymers also includes an azide compound.

12. The method of claim 1 wherein the polymers are polyphenylene oxide and high impact polystyrene.

13. The method of claim 12 wherein the weight ratio of polyphenylene oxide to high impact polystyrene ranges from about 40:60 to about 60:40.

14. The method of claim 1 wherein the polymers are polyphenylene oxide and polycarbonate.

15. The method of claim 1 wherein the polymers are polyphenylene oxide and an elastomer.

16. The method of claim 2 wherein the process is carried out in a continuous manner.

17. The method of claim 2 wherein the process is carried out in a semicontinuous manner.

18. The method of claim 1 wherein the organic solvent solution feed is interrupted upon formation of granules of a desired average size to dry the granule surfaces by devolatilization of the organic solvents, said feed resuming when substantially all of the granule surfaces have dried.

19. The method of claim 18 wherein the weight ratio of water to total polymer during the evaporation of solvent is maintained at a value in the range of about 1:1 to about 50:1.

20. The method of claim 19 wherein the solution contains up to about 50% by weight polymer.

21. The method of claim 19 wherein the organic solvent solution feed is interrupted when the unrecovered granules have reached an average size within the range of about 1000-5000 microns.